# EUROPEAN PATENT APPLICATION

(11) **EP 1 067 017 A2**
(43) Date of publication of application: **10.01.2001**
(21) Application number: 00305587.8
(22) Date of filing: 03.07.2000
(51) Int. Cl.: B60P 1/44

(54) **Actuation system**

(30) Priority: 03.07.1999 GB 9915530; 25.03.2000 GB 0007213
(71) Applicant: Ross & Bonnyman Limited, Forfar, Angus DD8 3DG (GB)
(72) Inventor: Sherriff, Andrew Sinclair, Airdrie ML6 0NR, Scotland (GB)
(74) Representative: Allan, James Stewart

(57) **Abstract**

The present invention provides a tail lift that includes a controller, the controller being disposed on a portion of the tail lift that reduces the risk of injury to the user during operation thereof. There is also described apparatus and a method for initiating operation of an electrically powered motor. The present invention also provides apparatus and a method for operating a warning system to warn an operator that is remote from an event.

## Description

The present invention relates to an apparatus for, and a method of operating, an actuation system, and more particularly, but not exclusively, to a control system for operating a tail lift provided on a vehicle.

Commercial vehicles such as heavy goods vehicles (HGVs) or the like are conventionally provided with lifting platforms such as tail lifts so that a load within the vehicle can be more easily removed from within the lorry (typically some height off the ground) to ground level, and vice versa. A tail lift generally comprises a portion of the rear of the vehicle, such as a platform, which is capable of being moved so that the platform is level with a floor of the vehicle, or on the ground. Such tail lifts can also be located at the front or side of the vehicle. It will be appreciated that the term "tail lifts" encompasses all such variations, regardless of the actual position of the lift on the vehicle.

Conventionally, hydraulic tail lifts comprise column type lifts that include guide posts fixed to the vehicle. Sliding members are movably coupled to the guide posts, and are further coupled to the platform. The sliding members are moved up and down the guide posts by means of actuation of a hydraulic fluid system thereby raising and lowering the platform between vehicle floor height and ground level. Conventionally, most hydraulic tail lift systems for use with vehicles such as lorries or vans, incorporate a number of control switches that are connected by wiring secured to the vehicle. The tail lift is normally located at the rear of the vehicle and incorporates up and down control switches that actuate the hydraulic system; operation of these up and down control switches cause the tail lift platform to respectively raise and lower between the raised vehicle bed floor and ground level.

The switches are conventionally provided at or near the rear of the vehicle and can typically be operated with a user standing on the platform of the tail lift, either by the user or a colleague.

A gap is typically formed between an edge of the platform nearest the vehicle, and a rear end of the vehicle when the platform is not level with the floor of the vehicle. However, this conventional system has a disadvantage in that when the user is standing on the platform whilst the tail lift is being operated, the user's feet can often protrude over the rearward edge of the platform into the gap between the rearward edge of the platform and the vehicle. This can be dangerous in that as the platform is being raised, the user's feet can be trapped between the platform and the vehicle causing injury to the user.

According to a first aspect of the present invention, there is provided a tail lift for attachment to a vehicle and having a controller to operate the tail lift, wherein the controller is disposed on the tail lift at a location remote from an interface between the vehicle and the tail lift.

According to a second aspect of the present invention there is provided a method of controlling operation of a tail lift on a vehicle, the method comprising providing a controller disposed on the tail lift at a location remote from an interface between the vehicle and the tail lift, and actuating the controller to operate the tail lift.

As the controller is located at a position remote from the interface between the tail lift and the vehicle, an operator has to move away from the interface to operate the system, thereby reducing the risk of injury e.g. to the feet.

The controller typically comprises at least one switch. Two switches are typically provided. A first switch facilitates movement of a platform of the tail lift in an upward direction, and a second switch facilitates movement of the platform in a downward direction. Alternatively, a rocker-type switch may be used wherein rocking of the switch in a first direction causes the platform to move upwards, and rocking of the switch in a second direction causes the platform to move downwards.

Optionally, the controller may include a third switch may be provided to control operation of the first and second switches. The third switch typically comprises an enable switch. The enable switch typically has a first and a second configuration. In the first configuration, operation of the first and/or second switch is disabled. In the second configuration, operation of the first and/or second switch is enabled. Preferably, the enable switch must be held in the second configuration during operation of the first and/or second switch.

Thus, the tail lift will not operate unless the user sets the enable switch into the second configuration to activate the first and/or second switch, and optionally holds the enable switch in the second position.

The first, second and/or third switches preferably comprise foot-operated switches. The first, second and/or third switches are preferably contact-less switches. This provides the advantage that the life expectancy and/or reliability of the switches is increased. The first, second and/or third switches typically comprise progressive resistive elements. Most preferably, the switches comprise piezzo resistive units, and may further be advantageously connected to a level detector unit, such as a voltage level detector unit.

Foot-operated switches are particularly beneficial, since they require the operator to have his feet at the fixed position away from the vehicle/lift interface.

Preferably, the controller includes a housing, wherein the or each switch is typically mounted to, on or in the housing. The controller may be located on, or in an arm of the tail lift, or may be located on or in the loading or weight bearing area of the platform of the tail lift.

The tail lift typically includes radio transmission means. This allows for operation of the tail lift using radio frequency. The radio transmission means typically comprises a transmitter unit and a receiver unit. The transmitter unit is typically located at or near the controller, and is preferably mounted to, on or in the housing. The receiver unit is typically located on the chassis of the vehicle.

The transmitter unit typically transmits command signals generated by the controller to the receiver unit. Optionally, the transmitter unit transmits an additional coded signal. This gives the transmitter unit a unique code that will only be recognised by the corresponding receiver unit.

The transmitter unit may be powered by a local battery, or may be powered by the power system of the vehicle (e.g. a battery).

The controller typically includes a computing means that is preferably coupled to the output of the switches, and is also preferably coupled to the input of the transmitter unit. The computing means may be capable of running a software program which may contain logic switching instructions, and a data protocol for use in actuation of the transmitter unit.

The receiver unit typically comprises a radio receiver unit, a data de-coder, and a power relay interface. The power relay interface typically interfaces with the tail lift. The receiver unit is typically powered by the power system of the vehicle, or may have an independent power source (e.g. a battery).

The transmitter unit optionally includes a low battery indicator circuit that transmits a signal to the receiver unit when the battery is low. The receiver unit is typically provided with indicia to indicate to a user the condition of the battery. The indicia may be audible and/or visual.

Optionally, the tail lift may include warning means to indicate that it is operational. This will warn people within the vicinity of the vehicle that the tail lift is in operation. The warning means may be audible and/or visual. The warning means may comprise a warning system for providing a warning to an operator remote from an event according to a fifth aspect of the present invention.

In certain embodiments of a tail lift where a retractable platform is used, the tail lift typically includes a proximity sensor that actuates the system when the platform is in an extended position. Thus, the tail lift will only operate when the platform is in a safe working position. In this embodiment, the platform typically includes a magnet disposed on a portion of the platform. The proximity sensor is typically located on an arm of the tail lift.

The tail lift typically includes an electric motor for generating movement of the platform. The electric motor typically includes a motor solenoid. The tail lift optionally includes a starting system for initiating operation of the electrically powered motor according to a third aspect of the present invention.

According to a third aspect of the present invention, there is provided a starting system for initiating operation of an electrically powered motor, the starting system comprising a voltage ramping circuit connected to a motor solenoid of the motor, the voltage ramping circuit having an electrical power supply, wherein operation of the voltage ramping circuit results in the voltage being supplied to the motor solenoid being increased gradually from zero volts to at least a portion of the terminal voltage of the electrical power supply.

Typically, the first aspect of the invention may further comprise the third aspect.

According to a fourth aspect of the present invention, there is provided a method of starting an electrically powered motor, the method comprising connecting a voltage ramping circuit to a motor solenoid of the motor, the voltage ramping circuit having an electrical power supply, and operating the voltage ramping circuit such that the voltage supplied to the motor solenoid is increased gradually from zero volts to at least a portion of the terminal voltage of the electrical power supply.

Typically, the second aspect of the invention may further comprise the fourth aspect.

Preferably, the electrical power supply comprises a battery. Typically, the voltage is ramped from zero volts to the battery terminal voltage in an exponential manner. Typically, the voltage ramping circuit comprises a capacitor-resistor circuit, the output of which is preferably coupled to a transistor circuit that may be an arrangement of transistors in a Darlington mode.

According to a fifth aspect of the present invention there is provided a warning system for providing a warning to an operator remote from an event, the system comprising a transmitter coupled to a transmission means, where the transmitter is capable of transmitting upon the occurrence of an event, and a receiver coupled to the transmission means, the transmission means being capable of transmitting other signals, data or the like, so that the receiver is capable of receiving the output of the transmitter notwithstanding the use of the transmission means for transmitting the other signals.

Typically, the first aspect of the invention may further comprise the fifth aspect.

According to a sixth aspect of the present invention there is provided a method of operating a warning system for providing a warning to an operator remote from an event, the method comprising coupling a transmitter to a transmission means, where the transmitter is capable of transmitting upon the occurrence of an event, and coupling a receiver to the transmission means, wherein the transmission means is capable of transmitting other signals, data or the like, and operating the system so that the receiver receives the output of the transmitter notwithstanding the use of the transmission means for transmitting the other signals.

Typically, the second aspect of the invention may further comprise the sixth aspect.

Preferably, the transmitter comprises a pulse-tone generator, and the receiver comprises a pulse-tone decoder. Typically, the transmission means comprises cables, wires, a telemetry system, or the like and is typically located on a vehicle and may also be used for conducting power to other vehicle apparatus such as vehicle lamps.

The invention of the fifth and sixth aspects has the advantage that the warning system can be used with the existing wiring of a vehicle.

Embodiments of the present invention shall now be described, by way of example only, with reference to the accompanying drawings, in which :-
Fig. 1 is a rear isometric view of a vehicle including an actuation system for operating a tail lift, a platform of the tail lift being in a raised position;
Fig. 2 is a rear isometric view of the vehicle of Fig. 1 with the platform in a lowered position;
Fig. 3 is a partly exploded view of a part of the actuation system of Figs 1 and 2;
Fig. 4 is an exploded view of part of the actuation system of Figs 1 to 3;
Fig. 5 is a cross-section of a portion of the tail lift, the platform of the tail lift including a proximity sensor;
Fig. 6 is a schematic exploded view of a foot switch and radio transmitter housing, intended for mounting on a platform of a tail lift;
Fig. 7 is a schematic representation of a radio receiver control unit, intended for mounting at a suitable location on the vehicle, such as the chassis;
Fig. 8 is an electronic/electrical schematic representation of a control circuitry, including a radio transmitter, contained in the housing of Fig. 6;
Fig. 9 is a schematic representation of a printed circuit board incorporating the control circuitry of Fig. 8;
Fig. 10 is an electronic/electrical schematic representation of the radio receiver control unit shown in Fig. 7, including a radio receiver;
Fig. 11 is a schematic representation of a printed circuit board incorporating the radio receiver control unit of Fig. 10;
Fig. 12 is a schematic plan view of the platform in a horizontal, in use, configuration;
Fig. 13 is an electronic/electrical schematic representation of pump motor control circuitry for use with the apparatus of the present invention;
Fig. 14 is a schematic representation of a printed circuit board incorporating the pump motor control circuitry of Fig. 13;
Fig. 15 is an electronic/electrical schematic representation of a cab warning system for use with the present invention;
Fig. 16 is a schematic representation of a printed circuit board incorporating the cab warning system of Fig. 15;
Table 1 is a bill of materials for the printed circuit board of Fig. 9;
Table 2 is a bill of materials for the printed circuit board of Fig. 11;
Table 3 is a data protocol for the radio transmitter shown in Fig. 8 and the radio receiver shown in Fig. 10;
Table 4 is a bill of materials for the pump motor control circuitry of Figs. 13 and 14;
Table 5 is a bill of materials for the cab warning system of Figs. 15 and 16.

The embodiments hereinafter described can be utilised with the lifting apparatus as described in European Patent Publication No 0,960,771, or with any other suitable truck platform.

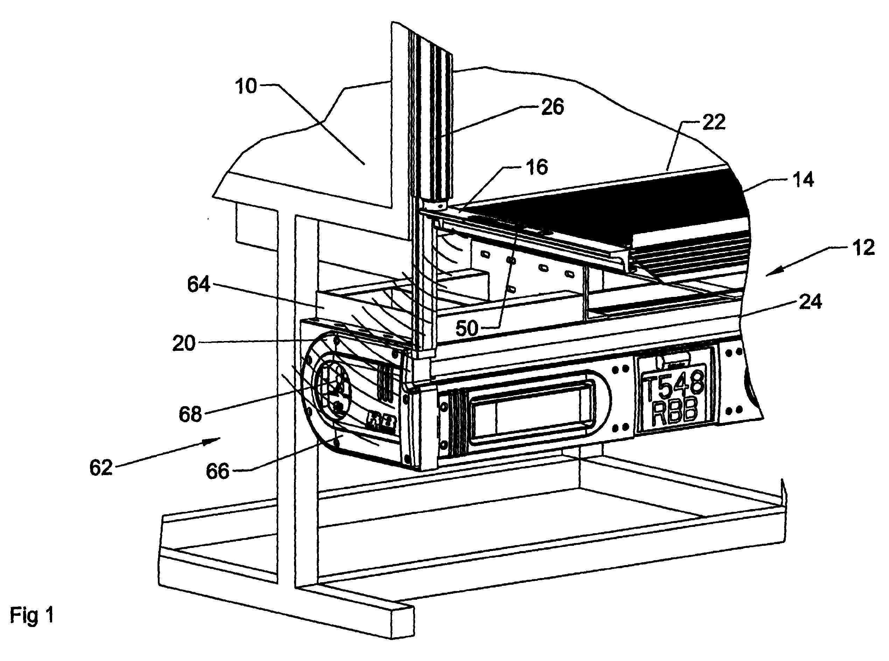

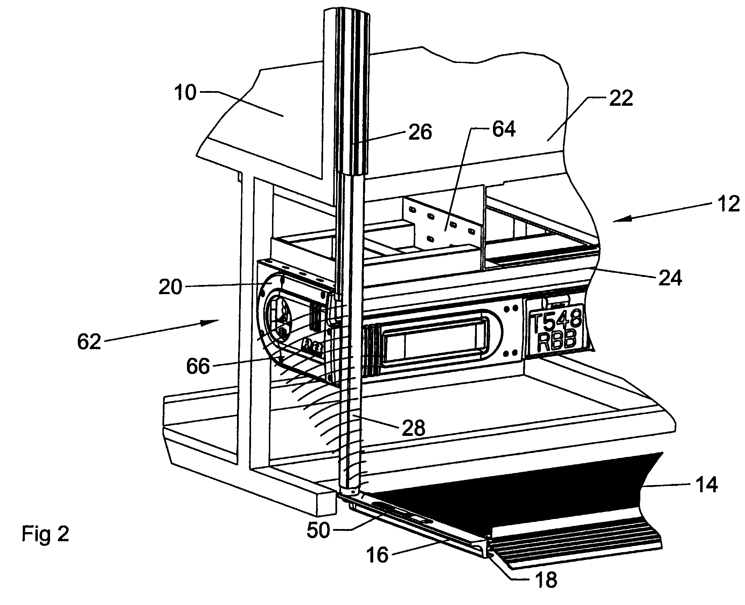

Referring to the drawings, Figs 1 and 2 show a rear isometric view of a vehicle 10, vehicle 10 including a tail lift, generally designated 12.

Tail lift 12 includes a lifting surface that typically comprises a retractable platform 14, although the present invention may be used with any conventional design of tail lift. Platform 14 typically extends between a pair of arms (only one arm 16 shown in Figs 1 and 2), with the two outer edges of the platform 14 engaging with slots 18 provided in the arm 16.

The platform 14 is typically constructed from a plurality of planks (not shown in detail) that are hinged along their longitudinal edges wherein the planks can pivot relative to one another, the planks typically being interconnected using ball and socket type joints. When not in use, the platform 14 can be retracted into a platform housing 20 suspended under the rear of the vehicle 10.

The platform 14 can be moved upwards and downwards, wherein the platform 14 is level with a floor 22 of the vehicle 10 (as shown in Fig. 1), and wherein the platform 14 is substantially at ground level (as shown in Fig. 2). It will be appreciated that the platform 14 can be positioned at any intermediate position between the extremities shown in Figs 1 and 2. For example, the platform 14 can be positioned in a platform park position 24, wherein the platform 14 can be retracted into housing 20. In addition, platform 14 can be positioned at a level to interface with a raised loading bay, for example.

When the platform 14 is level with the floor 22 of the vehicle 10, goods from within the vehicle 10 can be loaded onto the platform 14 and the platform 14 lowered to the ground position shown in Fig. 2 or to a loading/unloading bay wherein the goods can be unloaded from the platform 14, and vice versa.

To facilitate movement of the platform 14, the arms 16 are attached to a pair of hydraulic rams 26 (one shown in Figs 1 and 2), hydraulic rams 26 typically comprising an outer cylinder with telescopic pistons 28 (Fig. 2) slidably located therein. Pistons 28 can be extended from and retracted into cylinders 26 by hydraulic power apparatus (not shown).

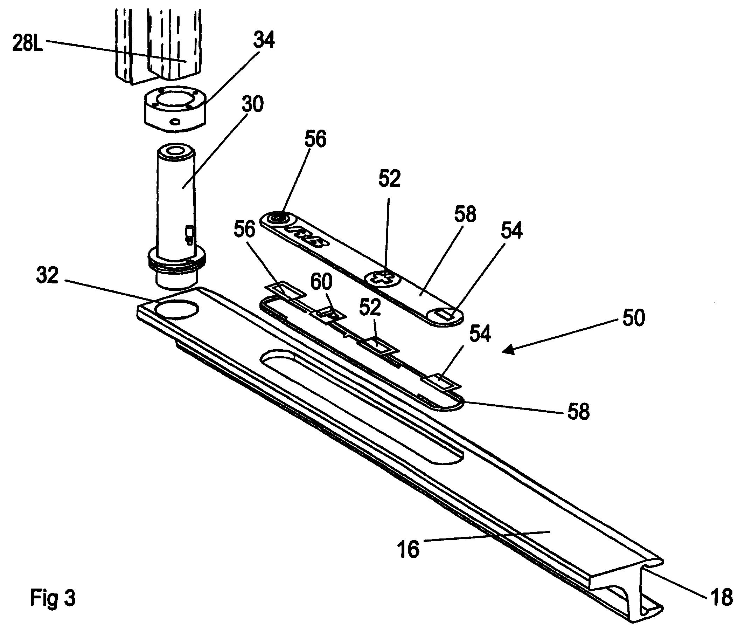

As shown more clearly in Fig. 3, arms 16 are attached to the lowermost ends 281 of the pistons 28 via a pin 30. The pin 30 is received in sockets 32 on the arms 16 and is typically welded into place. The other end of pin 30 is attached to a collar 34 and is positioned into the lowermost end 281 of piston 28 and secured using any conventional means.

Arms 16 are attached to pistons 28 so as to be pivotally movable relative to the fixed cylinders 26. Thus, the arms 16 can be pivoted in the plane perpendicular to the axis of the pistons 28 to lie parallel to the back of the vehicle, or to extend therefrom as shown in Figs 1 and 2. In certain embodiments of tail lifts, the arms 16 can also (or alternatively) be pivoted in the plane parallel to the axis of the pistons 28 so as to fold up parallel to and lying against the rearmost edge of the cylinder 26.

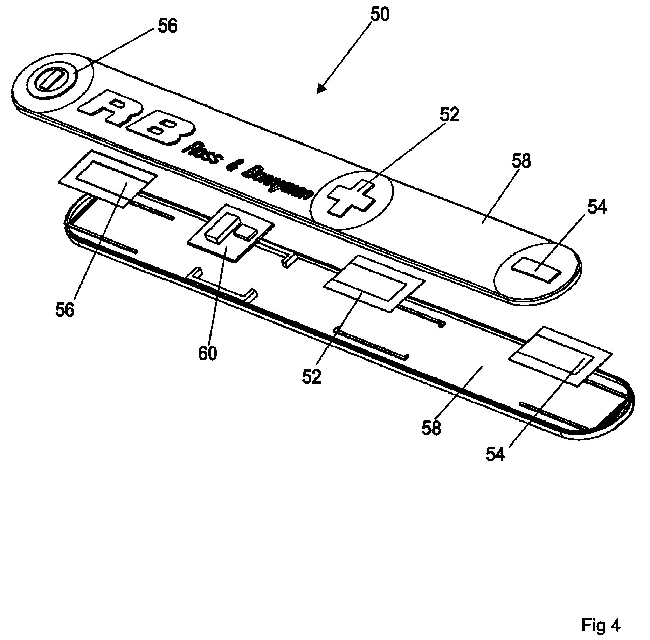

The tail lift 12 is provided with an actuation system that includes an actuation device 50. As shown in Figs 1 and 2, one of the arms 16 is provided with an actuation device 50, more clearly shown in Figs 3 and 4. Actuation device 50 typically includes an up switch 52 and a down switch 54. Actuation of the up switch 52 activates the hydraulic power apparatus to withdraw pistons 28 within cylinders 26 to move the platform 14 upwards. Similarly, actuation of the down switch 54 activates the hydraulic power apparatus to extend pistons 28 within cylinders 26 to move the platform 14 downwards. It is preferred, but not essential, that the up and down switches 52, 54 are continuously operated to maintain continuous upward and downward movement of the platform 14. Alternatively, the switches 52, 54 may be operated once to effect continual upward or downward movement of the platform 14 and operated again to stop movement.

Optionally, the actuation device 50 includes a system enable switch 56. The system enable switch 56 must be continuously operated by a user in all cases of operation of the actuation device 50. This is a safety feature that ensures that the tail lift 14 can only be operated when the system enable switch 56 is activated.

The up, down and enable switches 52, 54, 56 are preferably contact-less switches and are typically moulded into a rubber (or silicon) block 58. As the switches 52, 54, 56 are contact-less, the life expectancy and reliability of the actuation device 50 is typically greater than that of a conventional type switch unit. Alternatively, a rocker type switch may be used.

A user's foot is preferably used to operate the switches 52, 54, 56 and thus the switches 52, 54, 56 are typically sized to fit a shoe sole for the comfort of the user and ease of operation. The actuation device 50 can be moulded into the arms 16 and can be shaped to the necessary profile of the arm 16 for ease of operation.

The switches 52, 54, 56 are typically manufactured from a progressive resistive element for safety and reliability, such switches typically being used in vehicles to detect persons in the driving seat for, for example, seat belt warning lights and air bag control.

The actuation system typically includes a transmitter unit 60 that is typically a radio transmitter, and is advantageously formed as part of the actuation device 50, although it may form a separate unit. It will be appreciated that any transmission medium such as microwaves or the like could be used. Each of the switches 52, 54, 56 are electrically coupled to the transmitter unit 60, wherein actuation of any of the switches 52, 54, 56 causes the transmitter unit 60 to transmit a corresponding command to a receiver unit 62 (typically mounted to the vehicle 10 at a location remote from the actuation device 50). The transmitter unit 60 typically operates on the de-regulated low power radio frequency of 418 MHz or 433 MHz. It will be appreciated that the switches 52, 54, 56 may be radio switches and thus transmit commands directly to the receiver unit 62.

The transmitter unit 60 typically operates from an internal battery (not shown) or alternatively may be powered from the vehicle battery. The system may incorporate a battery charging system wherein the battery local to the transmitter unit 60 is recharged when the tail lift 12 is not in use. As an alternative to using rechargeable batteries, the transmitter unit 60 may be powered from alkaline or any other conventional batteries.

Referring to Figs 1 and 2, the receiver unit 62 is typically mounted to the chassis of the vehicle 10, for example under the floor 22, although it will be appreciated that the unit 62 may be located anywhere on the vehicle 10 providing it is within range of the transmitter unit 60, the range typically being around 5 metres. A chassis mounting bracket 64 may be used to suspend the receiver unit 62.

The receiver unit 62 is typically operated from the vehicle electrical power supply (e.g. a battery), and typically requires between 9 and 30 volts DC at approximately 3 amps rating.

The receiver unit 62 typically comprises a radio receiver, data decoder and power relay interface (not shown in detail). The power relay interface is used to switch relay contacts for the hydraulic power apparatus to actuate the tail lift 12. The relay contacts are typically rated at 24 volts DC, 20 amps, the relays typically providing two sets of isolated contacts having a common connection and normally open and normally closed contact sets.

The receiver unit 62 is typically housed in a sealed high impact styrene housing 66 that allows radio transmissions to penetrate to the receiver unit 62. The relay interface is conveniently located within housing 66.

The system is preferably encoded so that other adjacent systems are not adversely affected by operation of the actuation system. Each system is provided with a unique identification code that the transmitter unit 60 transmits simultaneously with the up, down and enable commands. The identification code may comprise an individual serial number, for example between 100 and 10000000, with each system being assigned a serial number and then being sub-divided into, for example, groups of 01 to 99. This should substantially prevent any other systems within the vicinity of the vehicle being activated by adjacent or close vehicles.

When the transmitter battery nears the end of its useful life, an additional code may be transmitted to the receiver unit 62. The additional code causes an audible sound, for example a rapid succession of beeps of 5 seconds duration, which informs the user that the battery in the transmitter unit 60 requires to be replaced. It should be noted that the actuation device 50 may be a sealed unit wherein the device 50 must be replaced when the battery requires to be replaced. In addition, a small light, for example a light emitting diode (LED) located on the receiver unit 62 may flash or light continuously to provide a visual indication of when the battery requires to be replaced. The flashing light and/or the audible sound are typically cancelled when a new battery or transmitter unit 62 is fitted.

When the system is being operated, an audible sound may be emitted to indicate that the system is operational and act as a warning to people within the vicinity. The sound may be an audible beep that is switched on and off at 2 second intervals.

Thus, the receiver unit 62 typically includes a low battery indicator (such as an LED) and an audible warning unit for emitting notification of operation of the tail lift 12 and/or the status of the battery in the transmitter unit 60.

The receiver unit 62 may also be provided with manually operated switches, generally designated 68, wherein the tail lift 12 may be operated in the event of failure of the system. In addition, the tail lift 12 may be operated by the switches 68 when it is not possible for a user to stand on the platform 14 and operate the actuation device 50, for example when there is no space on the platform 14.

As the user is required to operate the actuation device 50 and providing that the device 50 is located away from the rear edge of the platform 14, the actuation system substantially reduces the risk of personal injury to the users of tail lifts.

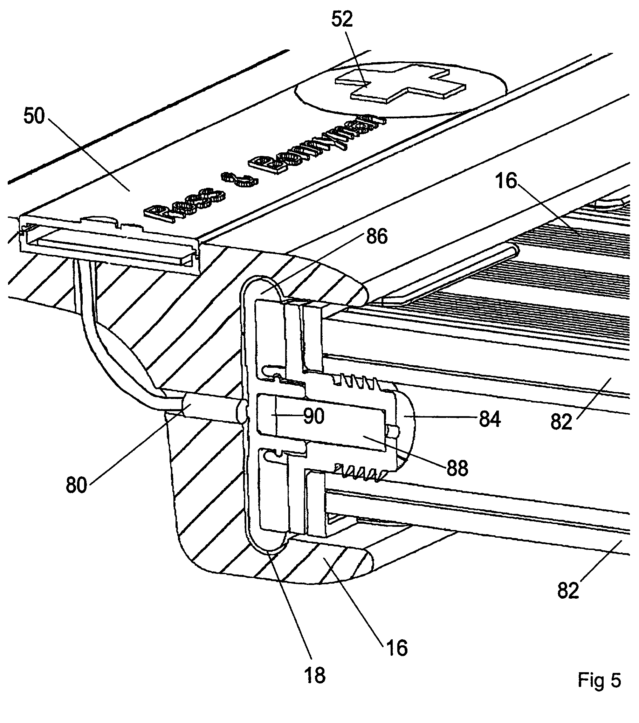

Referring to Fig. 5, the actuation system may include a proximity sensor 80 located at an appropriate position within the arm 16, the sensor 80 acting as a safety mechanism whereby operation of the actuation system is disabled unless the retractable platform 14 is fully extended into a safe, working position. The proximity sensor 80 is typically electrically coupled to the battery of the actuation device 50.

In the embodiment shown in Fig. 5, the platform 14 comprises a plurality of planks 82 that engage with slots 18 in the arms 16. An end cap 84 is engaged in each end of the plank 82 (only one end shown in Fig. 5), and a castor 86 is rotatably mounted to the end cap 84 using a castor pin 88. Thus, the platform 14 can be moved substantially horizontally along the arms 16 towards and away from the rear of the vehicle 10.

When the platform 14 is removed from the platform housing 22 it is extended to a safe working position wherein the platform 14 is typically fully extended along the length of arms 16. When the platform 14 reaches the safe working position, the proximity sensor 80 aligns with a magnet 90 within the castor 86. The proximity sensor 80 acts as an on/off switch that is activated by the magnet 90. Thus, when the sensor 80 and magnet 90 are aligned, the sensor 80 switches on and couples power from the internal battery to the actuation device 50. Thus, the actuation system is enabled and the tail lift 12 may be operated as described above.

However, if the alignment between the sensor 80 and the magnet 90 is lost for any reason, for example by movement of the platform 14, then the actuation system will be disabled and thus the tail lift 12 cannot be operated. The inclusion of the proximity sensor 80 provides a safety mechanism whereby if the platform 14 is not fully extended and the sensor 80 and magnet 90 are not aligned, then operation of the tail lift is disabled. This substantially prevents the tail lift 12 from being operated when the platform 14 is only partly extended or retracted, thus preventing any damage to the platform 14 due to accidental operation.

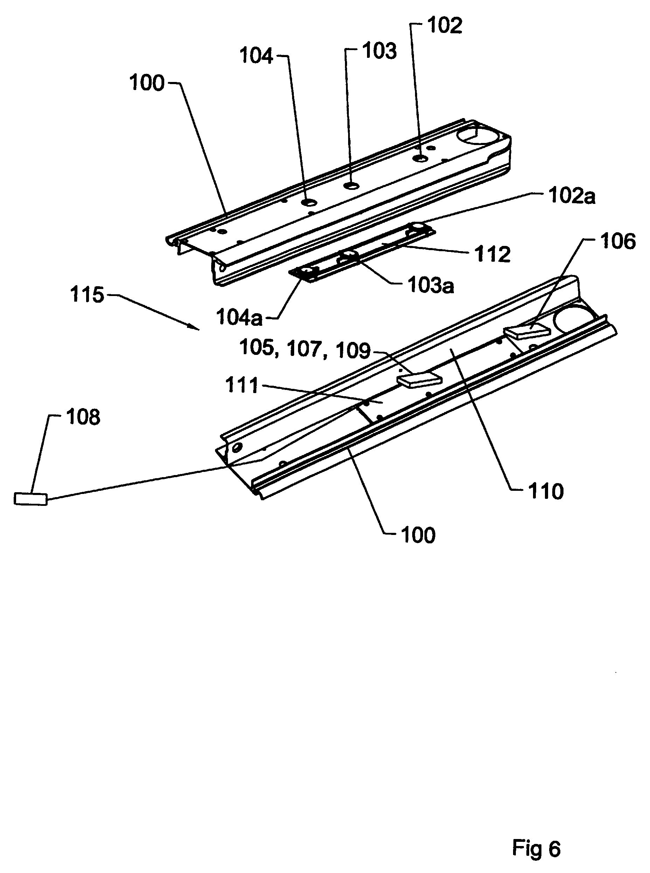

Fig. 6 shows a number of components that collectively make up a foot switch 115. The foot switch comprises a foot switch housing 100 that can be suitably located on a tail lift platform (e.g. platform 14) provided on a vehicle (e.g. vehicle 10). The housing 100 may be located on any suitable location of the platform, such as arms (not shown) or the loading area (not shown) of the platform itself. A number of buttons 102, 103, 104 that will be detailed subsequently, are set in the uppermost face of the housing 100, such that the buttons 102, 103, 104 can be depressed by a foot of an operator standing upon the arms or platform.

A foot operated enable button 102, foot operated up control button 103 and foot operated down control button 104 are aligned with respective switches 102a, 103a, 104a that are mounted on a switch support plate 112, where the switch support plate 112 is secured to the lower most face of the housing 100, in use. Accordingly, depression of the respective buttons 102, 103, 104 by a foot of the operator depresses respective switches 102a, 103a, 104a. The switches 102a, 103a, 104a are piezzo resistive units which, when under no compressive force, are arranged to exhibit a substantially infinitely high electrical resistance which, in practice, is in excess of 10 million ohms. When the switches 102a, 103a, 104a are under compressive force, they exhibit a much reduced effective electrical resistance of approximately 100 ohms. The buttons 102, 103, 104 and switches 102a, 103a, 104a therefore provide resistive pressure pads, that are hermetically sealed, and since the switches 102a, 103a, 104a are piezzo resistive, they have the advantage that they produce virtually no electrical noise.

Each switch 102a, 103a, 104a is advantageously connected to an inverting Schmitt trigger that provides level detection on the changing potential difference that is apparent across each switch element 102a, 103a, 104a and will vary according to foot pressure applied to the switches 102a, 103a, 104a. Therefore, the Schmitt inverters provide a clean transition between logic 0 and logic 1.

The electrical and electronic circuitry, which will be described subsequently, is actuated by means of a sensor 108 that is activated when the tail lift platform is in a fully extended position. Hence, activation of switch 108 supplies power to the entire electronic circuits of the foot switch 115.

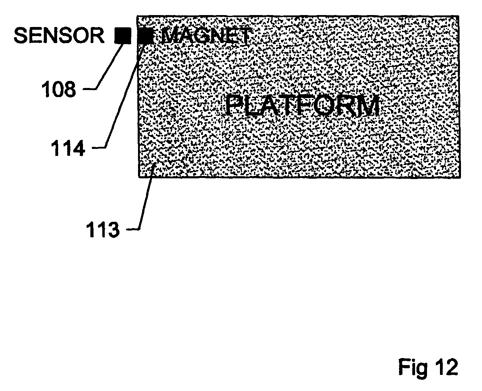

Fig. 12 shows the sensor 108 being aligned with a magnet 114 provided on the platform 113, where the sensor 108 is mounted upon an arm (e.g. arm 16), such that when the magnet 114 is aligned with sensor 108, the sensor 108 is activated. Fig. 12 shows the platform 113 in the fully extended configuration.

The outputs of the Schmitt inverters and the sensor 108 are connected to a programmable interrupt controller (PIC) processor unit 105 (Fig. 6) that holds a software program containing logic switching functions and radio transmitter data protocol.

When the PIC processor unit 105 is actuated by the sensor 108, an initialisation routine is carried out that scans the switch 102a, 103a, 104a inputs at a rate of 1 MHz.

An output of the PIC processor unit 105 is coupled to a radio transmitter 107 which in turn is coupled to an antenna 110, and the PIC unit 105 is configured so that it will instruct the radio transmitter 107 to send a data signal if the following button 102, 103, 104 actuation sequence is observed:-
a) The enable button 102 is actuated and the up control button 103 is actuated after a period of 200 milliseconds, but before a period of 2 seconds has lapsed; or
b) The enable button 102 is actuated and the down control button 104 is actuated after a period of 200 milliseconds, but before a period of 102 seconds has lapsed.

It should be noted that the following conditions are illegal and will not result in the PIC unit 105 instructing actuation of the radio transmitter 107:-
c) Actuation of the down control button 104 followed by actuation of the enable button 102;
d) Actuation of the up control button 103 followed by actuation of the enable button 102;
e) Actuation of either the up 103 or down 104 control buttons either sequentially or together;
f) Actuation of the up 103 or down 104 control buttons in any order of sequence with the exception of sequences a) or b) detailed above.

Accordingly, an operator sends a radio transmission through the transmitter 107 by firstly placing one of his feet on the enable button 102 to apply foot pressure thereto, and thereafter (within a period of 200 milliseconds and before a period of 2 seconds has lapsed) placing his other foot on either of the up 103 or down 104 control buttons as required to apply foot pressure thereto.

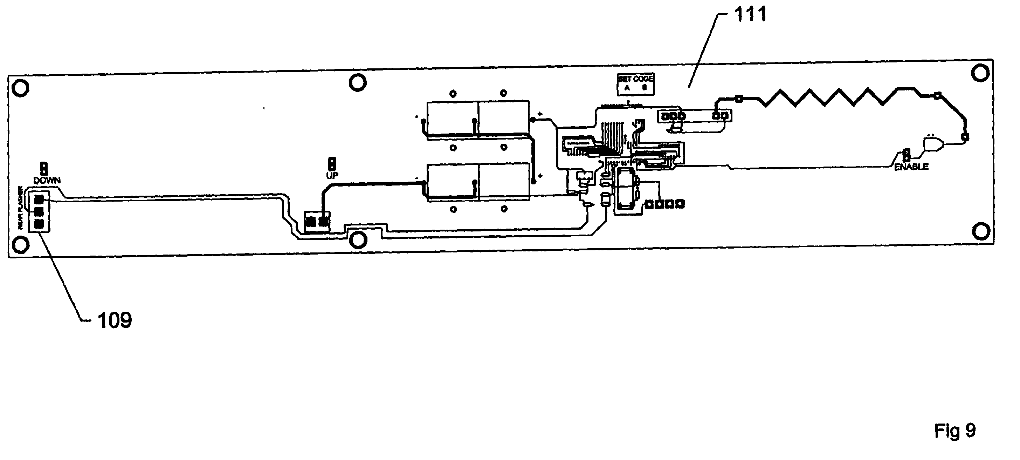

A printed circuit board (PCB) 111 is secured to the lower portion of the housing 100, and an example of a suitable PCB 111 is shown in Fig. 9. Table 1 illustrates a bill of materials for the foot switch 115. A battery 106 (Fig. 6) is provided to power the PCB 111, and a preferred battery 106 comprises three button styled lithium cells each having a terminal voltage of 3.3 volts and which are typically connected in parallel. Each cell incorporates diode protection against reverse current feedback from other cells since it is likely that not all three cells will have identical charges. The battery 106 will typically provide adequate energy to power the foot switch 115 for a period of three years, where this life span is based on 50 operations per day, with each operation lasting an average of 15 seconds each day, 365 days a year. However, the usual characteristics of a battery 106 will affect the overall lifespan thereof, such as storage temperature, times between manufacture and usage, general handling during manufacture process, excess heating during assembly onto the PCB 111, etc..

A connection unit 109 for a platform arm flasher lamp (not shown) is also provided, where the connection unit 109 is electrically coupled to the PIC processor unit 105, and which is actuated when the platform arms are being deployed outwardly from the vehicle.

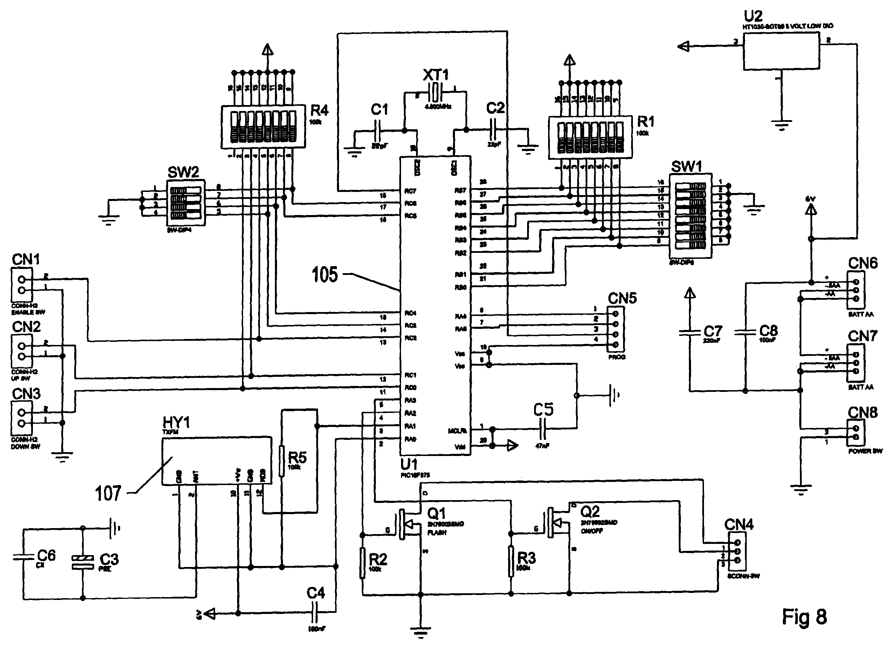

A schematic representation of the electrical components of the PCB is shown in Fig. 8.

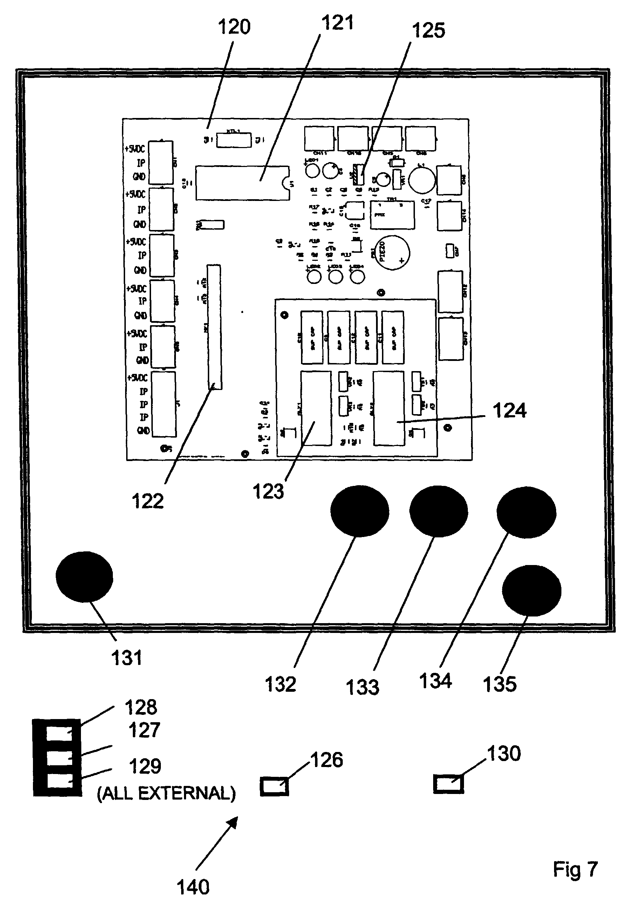

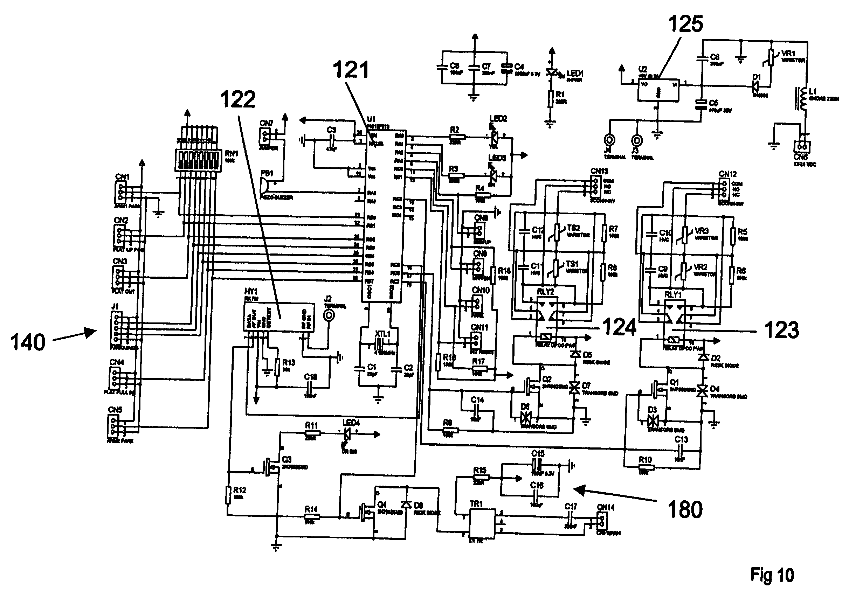

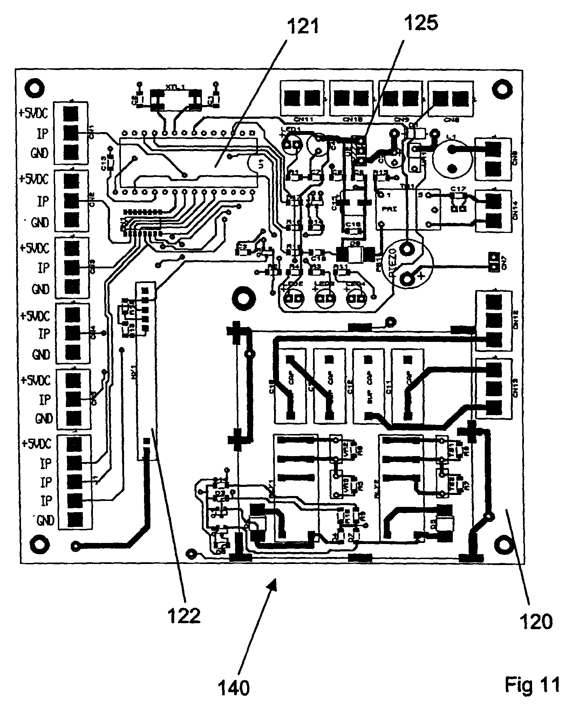

Figs. 7 and 11 collectively show, in schematic form, a receiver control unit 140, where the receiver control unit 140 may be located at any suitable location on the vehicle, such as a side of the vehicle in close proximity to the hydraulically operated platform lift. The receiver control unit 140 comprises a PCB 120, where the electrical components of the PCB 120 are shown in more detail in schematic form in Fig. 10 and the layout of the PCB 120 is shown in Fig. 11. Table 2 illustrates a bill of materials for the receiver control unit 140. An electronic processor unit 121 is provided on the PCB 120, and a radio receiver 122 is also mounted on the PCB 120 and is electrically coupled to the electronic processor unit 121. The PCB 120 also carries a pump up control relay 123, pump down control relay 124 and voltage regulator 125, all of which are electrically coupled to the electronic processor unit 121. The receiver control unit 140 also comprises a platform arm park sensor 126, a platform park position sensor 127, a platform up detect sensor 128, a platform down detect sensor 129, a platform up end position sensor 130, a reset switch 131, a manual up switch 132, a manual down switch 133, a park switch 134 and a main power switch 135, all of which are electrically coupled to the electronic processor unit 121.

The foot switch 115 and receiver control unit 140 are arranged so that, during the time that power is applied to the foot switch 115, the PIC processor unit 105 instructs the radio transmitter 107 to transmit a routine report code at five second intervals. This transmission of the routine report code ensures that the receiver control unit 140 is aware that the foot switch 115 is functioning correctly. The routine report code is effected by adding one additional data bit to the transmitted data signal (BIT# 22 in Table 3), where the transmitted data signal also includes a unique electronic serial number (ESN) (BIT#s 4 to 19 in Table 3) that is embedded within the software code for each respective foot switch 115. Therefore, it is not possible for two foot switch 115 units to have the same ESN. The ESN is embedded within the software code of the PIC processor unit 105. During installation of the foot switch 115 and receiver control unit 140, the foot switch 115 transmits the ESN to the electronic processor unit 121 for writing into the memory thereof. This transmission of the ESN is effected by the following sequence:-
1) Press and hold up 103 and down 104 control buttons together;
2) Then press the enable button 102 (together with 1)) and hold the enable button 102 for two seconds minimum but not exceeding 30 seconds;
3) Release all buttons 102, 103, 104; and
4) Press the enable button 102 and hold for two seconds minimum but not exceeding 30 seconds.

The ESN is now loaded into the electronic processor unit 121.

Accordingly, the electronic processor unit 121 is constantly scanning by means of the radio receiver 122, and must receive (at five second intervals) the routine report bit that confirms the radio link is good. However, if the routine report bit is missed three consecutive times (over a fifteen second period) then the receiver control unit 140 will automatically enable manual controls, these being (with reference to Fig. 7) manual up switch 132, manual down switch 133, park switch 134 and main power switch 135 only, thus disregarding any further actuation of the foot button controls 102, 103, 104. If this situation occurs, an audible tone in the form of a dual-tone alarm via a piezzo buzzer (PB1 in Fig. 10) is actuated for six seconds in order to warn the operator of the loss of the radio transmission, and an indicator lamp on the receiver control unit 140 is also illuminated for the total duration that the system is in manual mode. Accordingly, any controls received from the foot switch 115 will be ignored until the main power switch 135 is switched off and powered on again.

Table 3 sets out the data protocol used by the radio transmitter 107 and radio receiver 122, and this is the information regarding the specific assignment of the data bits that are sent from the radio transmitter 107 to the radio receiver 122 when in operation and also in standby mode. All bits are active high or logic 1 in Table 3. As shown in Table 3, the complete code is transmitted in data packets lasting fourteen milliseconds with 100 millisecond intervals between transmissions. Therefore, when the up 103 or down 104 control buttons are actuated, the transmission cycle is repeated at 100 millisecond intervals, and the preamble (BIT#s 1 and 2 in Table 5) is used to settle the radio receiver 122 input stage as this can take up to 300 microseconds to occur and will also help reduce the noise experienced by the radio receiver 122. The bit numbers 127, 128 are synchronisation bits that are used to re-calibrate the data input port timer (not shown) in the PIC processor unit 105.

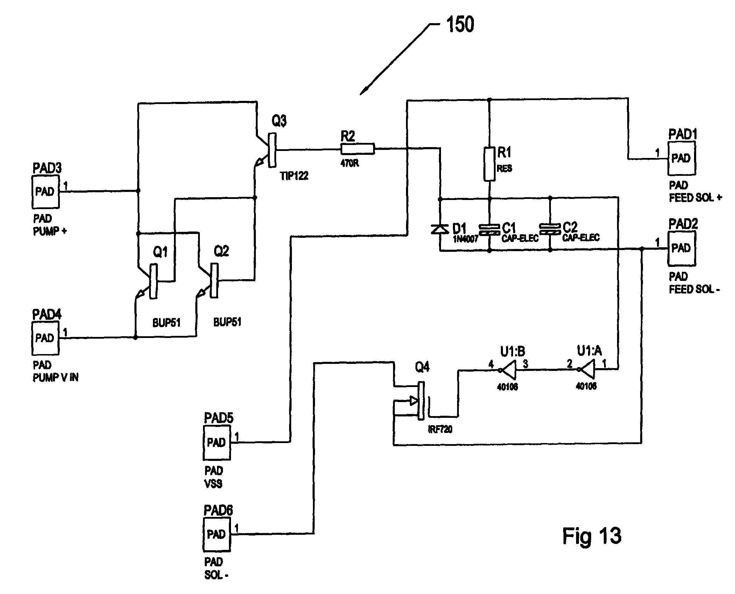

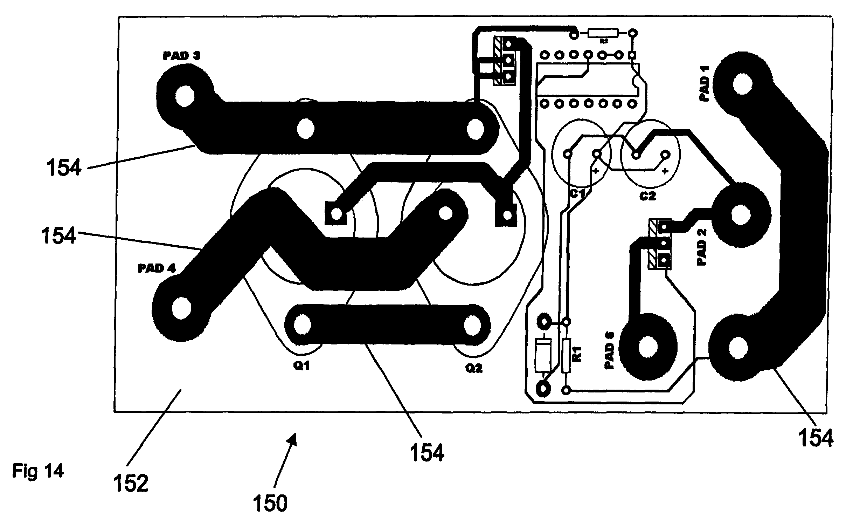

The hydraulically driven lift platform comprises a hydraulic pump motor (not shown) to provide power thereto. A soft starting system 150 for providing power to the hydraulic pump motor is shown in Figs. 13 and 14, with a component bill of materials shown in Table 4. The hydraulic pump motor can be a motor operating between 12 and 24 volts DC and up to 25 kW in power, although the soft starting system 150 could be modified for use with hydraulic pump motors outwith this range. It will be understood that motors of this power rating may have an initial start up current well in excess of 1000 amps. This initial start up current causes large electromagnetic interference (EMI) and starting contact arcing that may eventually lead to contact welding or excessive oxidisation that in turn results in heating and eventual component failure. This result is undesirable since it could occur during use of the platform lift on the vehicle, and lift failure is not a desired situation, and may be potentially dangerous to the user of the tail lift, the public and other road users.

In general, the soft starting system 150 reduces the initial start up motor current in-rush by ramping the voltage supplied to the motor gradually from 0 volts to the battery terminal voltage. The ramp is an exponential curve since it is derived from a capacitor-resistor charge circuit (R1, C1 and C2) as shown in Fig. 13. This voltage is applied to the base of an NPN transistor Q3 that is connected in a Darlington mode to a pair of power transistors Q1, Q2 that are used to provide and/or control the initial motor starting current. It should be noted that the power and current rating of the transistors Q1, Q2 may not be sufficient to continually run the motor, and that when the voltage across the motor reaches approximately 40% of the normal operating voltage, the soft start system 150 automatically engages the motor solenoid that is coupled across PAD 3 and PAD 4 and hence is coupled in parallel to the transistors Q1, Q2.

Accordingly, the soft starting system 150 reduces the EMI to a minimum, which is around 10% of the emissions that are normally present with a direct solenoid motor starter. This level is acceptable and will usually be within CE requirements.

The time duration for ramping the transistors Q1, Q2, Q3 up is very fast, in the order of 0.5 to 1.5 seconds before the normal starter solenoid is powered on. However, this is sufficient to significantly reduce the EMI and initial in-rush current to the motor. Due to the fact that the on period of the transistors Q1, Q2, Q3 is relatively small, it is not necessary to utilise dedicated heat sinks, and the soft start housing (not shown) can be utilised as a heat sink. The soft start housing will only get warm if the motor is repeatedly started and stopped; this is a possibility, but will not be the usual operating method. However, heat sinks may be provided if required.

A thermal switch may be used to disable the soft starter system 150 if the temperature of the transistors Q1, Q2, Q3 exceed 85°C, thereby bypassing them to directly operate the starter solenoid. Thus, the hydraulic pump motor is not rendered unusable in the event of excessive starting and stopping actions that may cause the transistors Q1, Q2, Q3 to overheat.

The motor solenoid is connected across PADs 3 and 4 whilst the battery voltage is connected between PADs 1 and 2, observing the battery polarisation on PADs 1 and 2. The solenoid energiser coil is connected between PADs 5 and 6, respectively. R2 is employed to regulate the base current into transistor Q3 where transistor Q3 is used to control the base currents to transistors Q1 and Q2. An n-channel small power FET Q4 is used to actuate the starter solenoid and hold the starter solenoid on, and field effect transistor (FET) Q4 will only take a relatively small current, in the order of a few amps, and therefore FET Q4 is rated at 10 amps to allow a ceiling on the power of the soft starting system 150. Diode D1 is utilised to rapidly discharge the voltage ramp capacitors C1 and C2 when the power is removed from the circuit, thus allowing the ramp to reset to 0 volts again. If diode D1 was omitted, then the ramp would start at the voltage present across capacitors C1 and C2 and hence the soft starting system 150 would have no beneficial result.

Schmitt inverters U1A and U1B toggle on to control the solenoid operation when the voltage at the input and hence the voltage also across the motor is at 75% of the full battery voltage, thus resulting in the bypassing of the power transistors Q1 and Q2. This value of 75% of the full battery voltage may be adjusted by the inclusion of a series resistor (not shown) into the power supply voltage of the Schmitt inverter U1. This would result in reducing the reference voltage of the circuit and prompt the solenoid control FET Q4 to power on at a lower battery voltage, and it may be desirable to set the lower voltage to 40% of the input voltage.

An exemplary layout of the PCB 152 for the soft start system 150 is shown in Fig. 14, and is approximately scaled at life size. It should be observed that there is a relatively large area of track 154 where the current to the motor passes. The reason for this is that if the current is present for longer than ten seconds then it is likely that tracks of a smaller cross-sectional area would burn out due to the excessively high current. The PCB 152 shown in Fig. 14 may be manufactured from standard FR4 2 ounce copper, although a less expensive board material may be used such as paper phenolic resin material, and the copper may be 3 or 4 Oz enabling a higher current capacity.

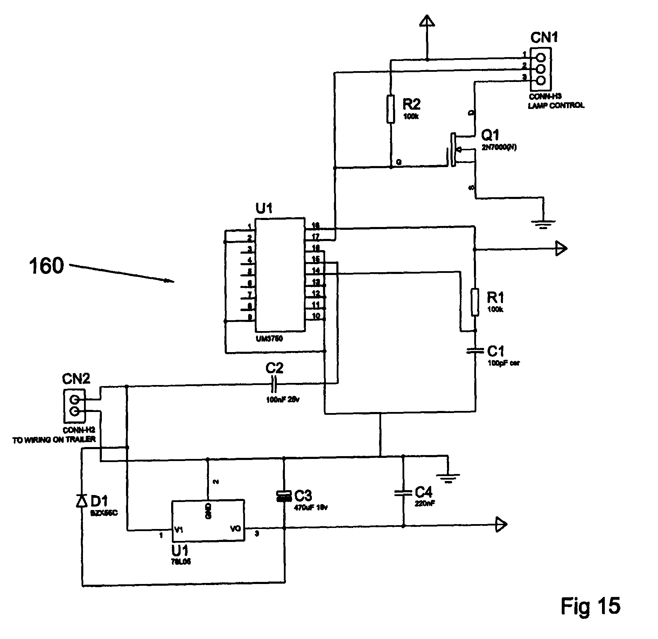

A cab warning system 160 is shown in Fig. 15. A warning lamp, such as a high brightness LED lamp (not shown) is coupled to connector CN1, and the cab warning system incorporates a remote electronic circuit that illuminates the high brightness LED lamp when the platform lift arms are away from the parked position.

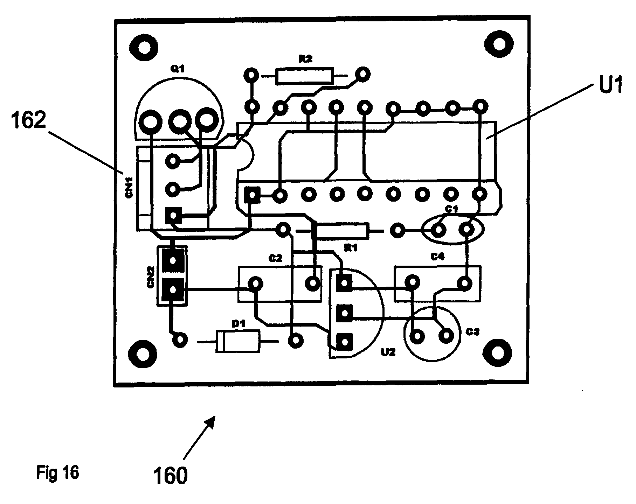

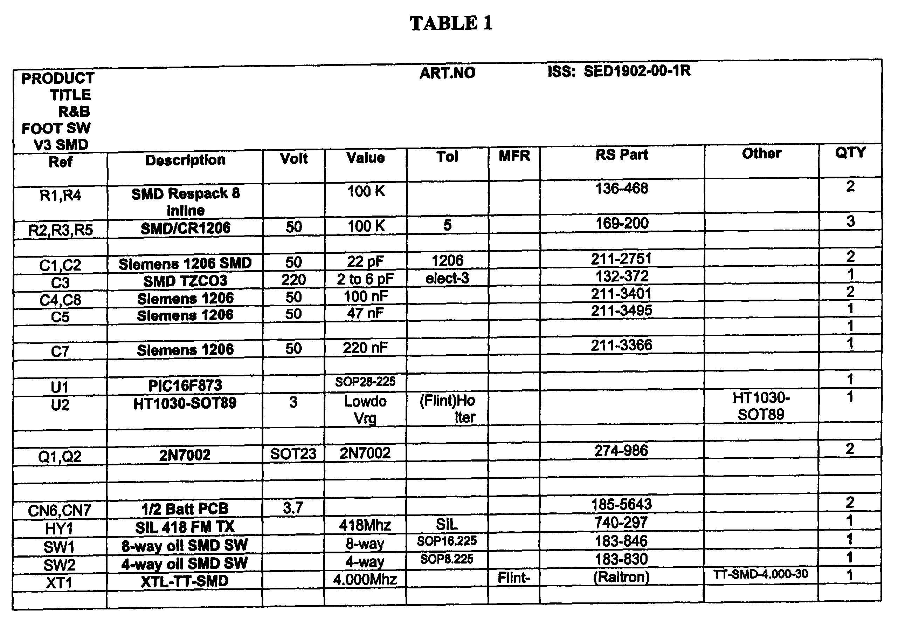

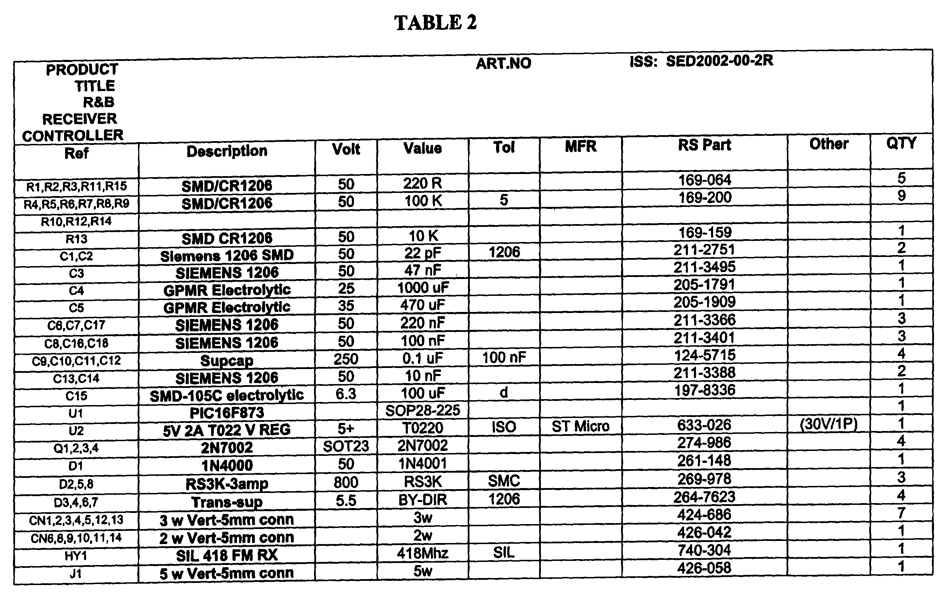

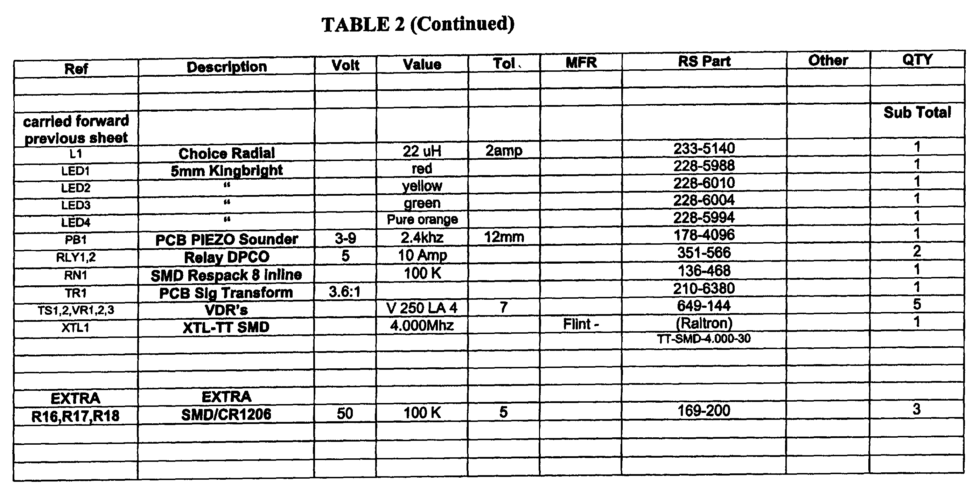

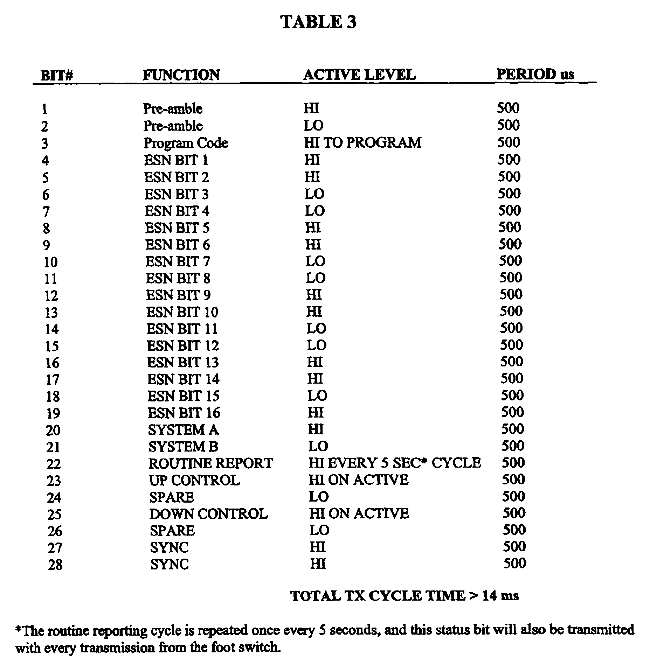

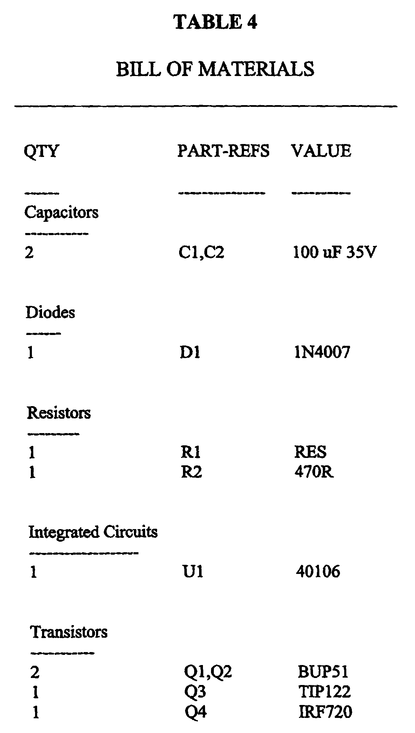

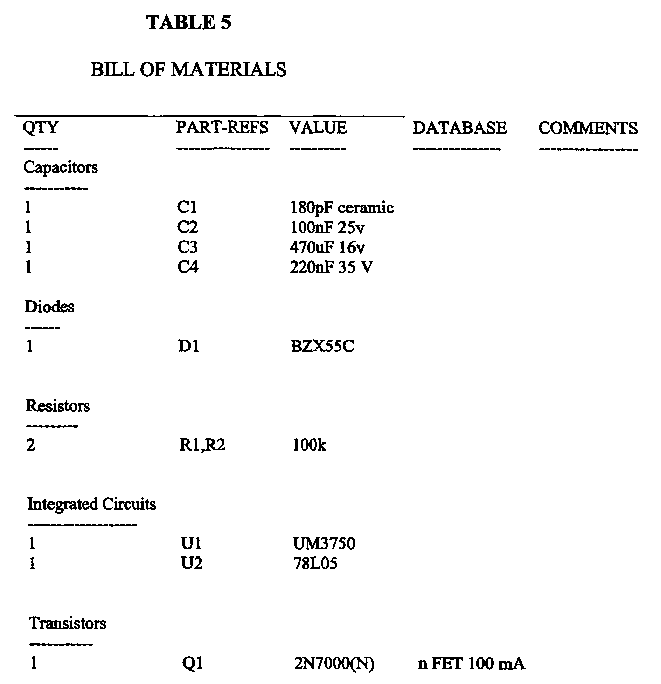

As seen in Fig. 10, the receiver control unit 140 includes a simple pulse-tone generator, generally designated 180 that is capable of inducing a one kHz AC voltage into the vehicle's wiring loom that is connected to wiring connectors CN14, where the wiring connectors CN14 are AC coupled via a capacitor C17. The simple pulse-tone generator 180 is driven directly from the electronic processor unit 121 via a transformer TR1. The tone is pulsed on and off at one second intervals and the cab warning system 160 located in the cab of the vehicle will illuminate the high brightness LED lamp if this signal is received, since the cab warning system 160 comprises a simple pulse-tone decoder and hold-on circuit, as shown in Fig. 15. The cab warning system 160 is coupled to the vehicle wiring loom via wire connector CN2. Fig. 16 shows a schematic layout of a PCB 162 for the cab warning system 160. The PCB 162 may comprise a double sided FR4 one Oz circuit board, and can be located on the vehicle. The PCB 162 may be powered from the vehicle power supply, or may incorporate its own local battery, and where this is the case, the local battery may be charged from the vehicle electrics.

The PCB 162 includes a voltage regulator U2 that converts the 12 or 24 volt supply into the 5 volts required by the various components on PCB 162. The pulse-tone signal sent by the electronic processor unit 121 is input to U1 via CN2, where CN2 is directly connected to any wire that connects the vehicle wiring to the receiver control unit 140 at the rear of the vehicle. For instance, the vehicle wiring may be +12 or +24 volts wiring that is used to power the receiver control unit 140 and the lift pump.

Q1 is used to drive the high brightness LED lamp (which may be a cluster type) that is typically located in the driver's cab, providing that the demand current does not exceed 150 mA at 5 volts if any type of indicator lamp is to be used for this purpose. Table 5 illustrates a bill of materials for the cab warning system 160.

The actuation system can be installed by original equipment manufacturers (OEMs) or can be retro-fitted into existing vehicles. It should be noted that the actuation system need not be radio operated, although this is advantageous, and the actuation system may be conventionally wired.

Thus, there is provided an actuation system for operating a tail lift which, in certain embodiments, provide a remote operation switch on a platform of the tail lift. The switch in certain embodiments is typically operated by the user's feet and thus the user is substantially protected from accidental injury whilst the tail lift is in operation.

Modifications and improvements may be made to the foregoing without departing from the scope of the present invention.

## Claims

1. A controller for operating a tail lift, the tail lift being capable of attachment to a vehicle, wherein the controller is disposed on the tail lift at a location remote from an interface between the vehicle and the tail lift, the controller comprising at least one switch.

2. A controller according to claim 1, wherein two switches are provided.

3. A controller according to claim 2, wherein a first switch facilitates movement of a platform of the tail lift in an upward direction, and a second switch facilitates movement of the platform in a downward direction.

4. A controller according to claim 2 or claim 3, wherein the controller includes a third switch that is provided to control operation of the first and second switches.

5. A controller according to claim 4, wherein the third switch has a first and a second configuration.

6. A controller according to claim 5, wherein when the third switch is in the first configuration, operation of the first and/or second switch is disabled.

7. A controller according to claim 5 or claim 6, wherein when the third switch is in the second configuration, operation of the first and/or second switch is enabled.

8. A controller according to any one of claims 5 to 7, wherein the third switch is held in the second configuration during operation of the first and/or second switch.

9. A controller according to any one of claims 3 to 8, wherein the first, second and/or third switches comprise foot-operated switches.

10. A controller according to any preceding claim, wherein the controller includes a housing, and the or each switch is mounted to, on or in the housing.

11. A controller according to any preceding claim, wherein the controller is located on, or in an arm of the tail lift.

12. A controller according to any one of claims 1 to 11, wherein the controller is located on or in the loading or weight bearing area of a platform of the tail lift.

13. A controller according to any preceding claim, wherein the controller is provided with signal transmission means.

14. A controller according to claim 13, wherein the signal transmission means comprises a transmitter, and a receiver.

15. A controller according to claim 14, wherein the transmitter transmits command signals generated by the controller to the receiver.

16. A controller according to either claim 14 or claim 15, wherein the transmitter transmits an additional coded signal.

17. A controller according to any one of claims 14 to 16, wherein the transmitter transmits signals to the receiver via a transmission medium.

18. A controller according to claim 17, wherein the transmission medium is capable of transmitting other signals so that the receiver is capable of receiving the output of the transmitter notwithstanding the use of the transmission medium for transmitting the other signals.

19. A controller according to either claim 17 or claim 18, wherein the transmission medium comprises cables, wires, a telemetry system, or the like provided on the vehicle.

20. A controller according to any one of claims 17 to 19, wherein the transmission medium is used for conducting power or other signals to other vehicle apparatus.

21. A controller according to any one of claims 14 to 20, wherein the transmitter comprises a radio frequency transmitter, and the receiver comprises a radio frequency receiver.

22. A controller according to any one of claims 14 to 20, wherein the transmitter comprises a pulse-tone generator, and the receiver comprises a pulse-tone decoder.

23. A controller according to any one of claims 14 to 22, wherein the controller includes a computing means that is coupled to the output of the switches, and is also coupled to the input of the transmitter.

24. A controller according to claim 23, wherein the computing means is capable of running a software program that may contain logic switching instructions, and a data protocol for use in actuation of the transmitter unit.

25. A controller according to any one of claims 14 to 24, wherein the receiver includes a power relay interface.

26. A controller according to claim 25, wherein the power relay interface interfaces with the tail lift.

27. A controller according to any preceding claim, wherein the tail lift includes a retractable platform, the tail lift including a proximity sensor that actuates the tail lift when the platform is in an extended position.

28. A method of controlling operation of a tail lift on a vehicle, the method comprising providing a controller disposed on the tail lift at a location remote from an interface between the vehicle and the tail lift, and actuating the controller to operate the tail lift, the controller comprising at least one switch.

29. A method according to claim 28, wherein the controller comprises two switches, and wherein a first switch facilitates movement of a platform of the tail lift in an upward direction, and a second switch facilitates movement of the platform in a second direction.

30. A method according to claim 29, wherein the step of actuating the controller comprises actuating the first switch to move the platform upwards, and actuating the second switch to move the downwards.

31. A method according to claim 29 or claim 30, wherein the controller includes a third switch that controls operation of the first and second switches, and wherein the step of actuating the controller includes the additional step of actuating the enable switch.

32. A starting system for initiating operation of an electrically powered motor, the starting system comprising a voltage ramping circuit connected to a motor solenoid of the motor, the voltage ramping circuit having an electrical power supply, wherein operation of the voltage ramping circuit results in the voltage being supplied to the motor solenoid being increased gradually from zero volts to at least a portion of the terminal voltage of the electrical power supply.

33. A warning system for providing a warning to an operator remote from an event, the system comprising a transmitter coupled to a transmission means, where the transmitter is capable of transmitting upon the occurrence of an event, and a receiver coupled to the transmission means, the transmission means being capable of transmitting other signals, data or the like, so that the receiver is capable of receiving the output of the transmitter notwithstanding the use of the transmission means for transmitting the other signals.
